(19) Europäisches Patentamt
European Patent Office
Office européen des brevets

(11) Veröffentlichungsnummer: **0 265 677 B1**

(12) **EUROPÄISCHE PATENTSCHRIFT**

(45) Veröffentlichungstag der Patentschrift: 27.02.91

(51) Int. Cl.⁵: **F16L 59/12**

(21) Anmeldenummer: 87114111.5

(22) Anmeldetag: 26.09.87

(54) **Festpunkt einer erdverlegten, aus einem Mediumrohr und einem Mantelrohr bestehenden Rohrleitung.**

(30) Priorität: 30.09.86 DE 3633138

(43) Veröffentlichungstag der Anmeldung:
04.05.88 Patentblatt 88/18

(45) Bekanntmachung des Hinweises auf die Patenterteilung:
27.02.91 Patentblatt 91/09

(84) Benannte Vertragsstaaten:
BE CH DE FR IT LI LU NL

(56) Entgegenhaltungen:
EP-A- 0 081 667      EP-A- 0 192 785
DE-A- 2 845 035      DE-A- 3 413 747
DE-A- 3 534 965      DE-B- 1 295 927
US-A- 3 547 161

(73) Patentinhaber: **DSD - Dillinger Stahlbau GmbH
Henry-Ford-Strasse
D-6630 Saarlouis(DE)**

(72) Erfinder: **Meyer, Friedhelm
33, Spicherer Bergstrasse
D-6600 Saarbrücken(DE)**

(74) Vertreter: **Bernhardt, Winfrid, Dr.-Ing.
Kobenhüttenweg 43
D-6600 Saarbrücken(DE)**

## Beschreibung

Die Erfindung betrifft eine erdverlegte Rohrleitung, die aus einem ein Medium führenden Mediumrohr und einem dieses mit Abstand umgebenden Mantelrohr besteht, die an einem Festpunkt, insbesondere mit axialer Vorspannung, verbunden sind durch zwei am Mantelrohr angeordnete Ringscheiben und eine dazwischen am Mediumrohr angeordnete Ringscheibe, die über wärmedämmende Zwischenlagen axial aneinanderliegen.

Die Wärmedämmung eines solchen, aus der EP-A-0 192 785 bekannten Festpunktes ist besser als bei der üblichen umgekehrten Anordnung, bei der die zwei Ringscheiben an dem in der Regel heißen Mediumrohr als Wärme abgebende Rippen wirken; der Festpunkt nach der EP-A-0 192 785 beschränkt diese Wirkung auf eine Ringscheibe. Verhältnismäßig unbefriedigend sind jedoch die Schweißungen. Die beiden am Mantelrohr angeordneten Ringscheiben sind jeweils durch nur eine Schweißnaht an ihren einander abgewandten Seiten mit dem Mantelrohr verbunden; die dabei nach hinten liegende Schweißnaht ist schwer anzubringen. Die am Mediumrohr angeordnete Ringscheibe ist durch zwei Schweißnähte beidseitig auf einer Hülse befestigt, die ihrerseits auf das Mediumrohr aufgeschoben und an diesem durch nur eine Schweißnaht axial gehalten ist.

Demgegenüber liegt der Erfindung die Aufgabe zugrunde, eine hinsichtlich der Schweißnähte möglichst unkritische Verbindung zu gestalten.

Gemäß der Erfindung wird dieser Zweck bei einer Rohrleitung der eingangs bezeichneten Art dadurch erfüllt, daß die genannte eine Ringscheibe an einem als Drehteil ausgeführten kurzen Rohrstück des Mediumrohres ausgebildet ist und die Ringscheiben axial verschraubt sind.

Damit fallen die die Schweißnähe zum Befestigen der bisher aufgeschweißten Ringscheibe fort, d.h. besonders kritische, weil an dem heißen Mediumrohr liegende Schweißnähte.

Dieser Vorteil wird mit dem Drehteil nicht zu teuer erkauft. Denn ein gesondertes kurzes Rohrstück des Mediumrohres benötigt man an dem Festpunkt ohnehin regelmäßig, um hier die Wanddicke zu vergrößern. Die eine, an dem Mediumrohr gegenüber den beiden anderen sehr viel kleinere und durch Drehen an der Außenseite zu formende Ringscheibe verlangt dann keinen so großen Mehraufwand, zumal in der weiteren vorteilhaften Ausgestaltung, daß man die Verdickung der Wand nach außen hin und zu der Ringscheibe schräg ansteigend aufbaut, so daß nur verhältnismäßig wenig Material abgedreht zu werden braucht.

Um die Schweißarbeit im ganzen zu erleichtern, wird ferner vorgeschlagen, daß die genannten zwei Ringscheiben das Mantelrohr radial durchsetzen und an der Außenseite des Mantelrohres mit ihm verschweißt sind. Dort läßt es sich ungehindert schweißen.

Ein wesentlicher Vorteil gegenüber dem bekannten Stand der Technik ist ferner, daß die jetzt vorhandenen Schweißnähte zerstörungsfrei prüfbar sind.

In den Zeichnungen ist ein Ausführungsbeispiel der Erfindung einem herkömmlichen Festpunkt gegenübergestellt.

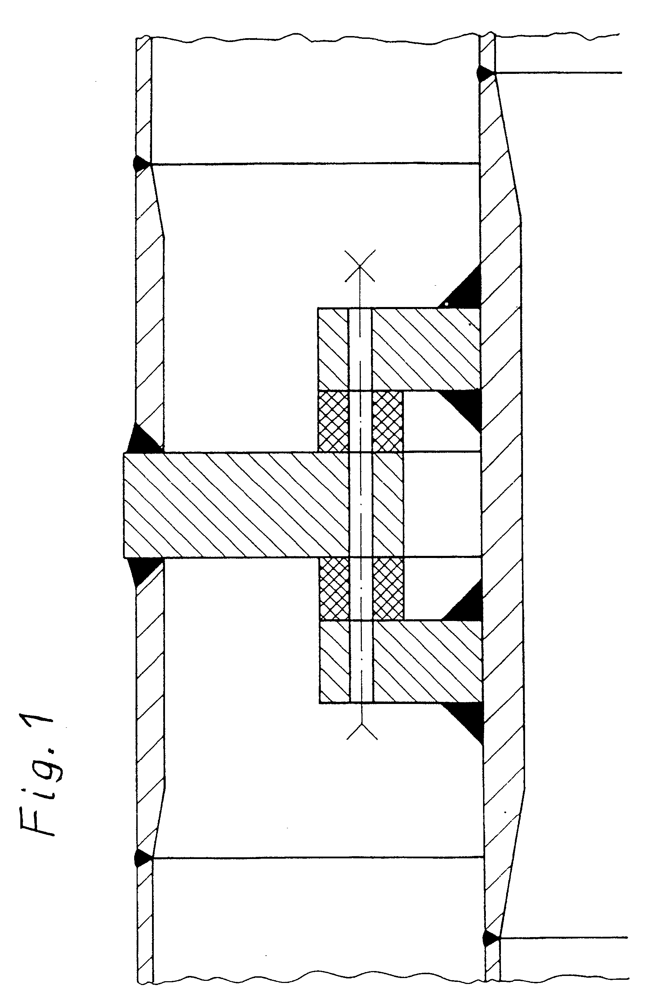

Fig. 1     zeigt einen herkömmlichen Festpunkt mit einem axialen Schnitt durch die Rohrleitungswandung,

Fig. 2     zeigt einen neuen Festpunkt in einem Fig. 1 entsprechenden Schnitt.

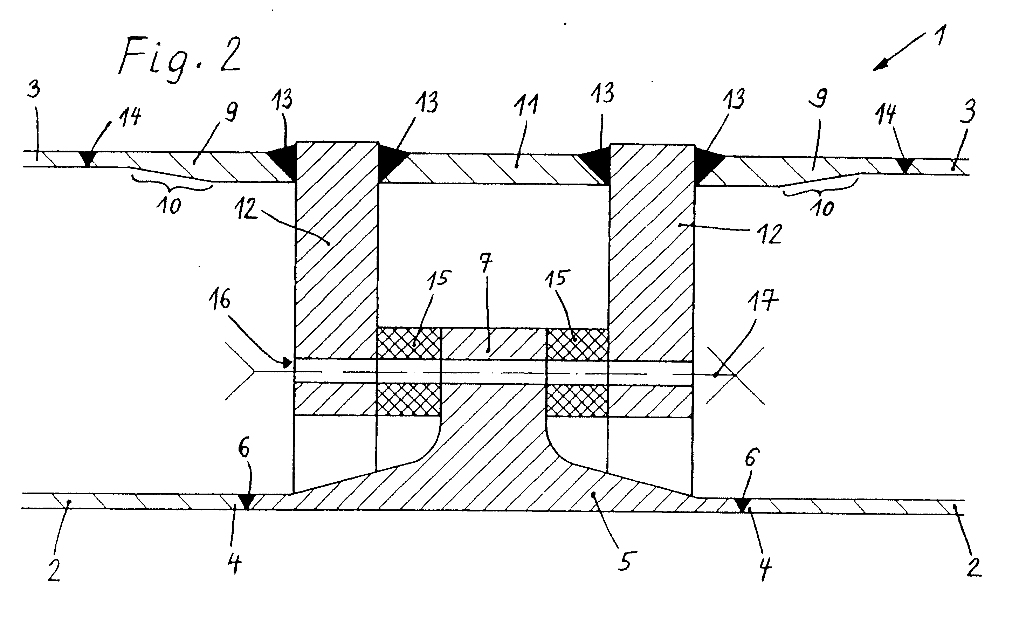

Im folgenden beschrieben ist nur Fig. 2.

Eine Rohrleitung 1 besteht aus einem Mediumrohr von beispielsweise 1000 mm Durchmesser und einem Mantelrohr 3 von beispielsweise 1400 mm Durchmesser, in dem das Mediumrohr 2 durch eine entsprechende Abstützung konzentrisch angeordnet ist. Beispielsweise alle 150 m ist ein Festpunkt eingerichtet, wie er in der Zeichnung dargestellt ist. An diesem Festpunkt ist beim Bau der Rohrleitung in einer hier nicht näher zu beschreibenden Weise das Mediumrohr 2 unter Zugspannung und das Mantelrohr 3 unter Druckspannung gesetzt und sind die beiden Rohre in diesem vorgespannten Zustand axial gegeneinander fixiert worden. Die im Betrieb durch die Erhitzung des Mediumsrohres entstehende Wärmespannung wird damit ganz cder teilweise oder überausgeglichen. Der Festpunkt ist darüber hinaus zum Übertragen aller auftretenden Axialkräfte vom Innenrohr auf das Mantelrohr 3 imstande.

An dem Festpunkt ist zwischen zwei Rohrenden 4 des Mediumrohrs ein kurzes Rohrstück 5 mit zwei Schweißnähten 6 eingesetzt. Das Rohrstück ist ein Drehteil. Sein Innendurchmesser ist durchgehend gleich dem Innendurchmesser des übrigen Mediumrohres 2. Sein Außendurchmesser ist an den beiden Enden gleich dem Außendurchmesser des übrigen Mediumrohres 2 und steigt weiter innen nach der Mitte hin an, wo er sich zu einer Ringscheibe 7 vergrößert.

Auch das Mantelrohr 3 weist an dem Festpunkt ein Zwischenstück von vergrößerter Wanddicke auf. Es ist dreigeteilt. Seine beiden Endteile 9 haben an den Enden gleichen Innen- und Außendurchmesser wie das übrige Mantelrohr 3 und verdicken sich dann auf einem Zwischenabschnitt 10 nach innen hin. Zwischen ihnen und dem dritten, mittleren Teil 11 des Zwischenstücks sitzen zwei Ringscheiben 12. Die betreffenden Schweißnähte 13 sind von außen aufgebracht. Die die Endteile 9 des Zwischenstücks mit dem übrigen Mantelrohr verbindenden Schweißnähte sind mit 14 bezeichnet.

Zwischen der Ringscheibe 7 und den beiden Ringscheiben 12 sind zwei Ringe 15 aus einem wärmedämmenden, aber druckfesten Material eingesetzt. Durch fluchtende Bohrungen 6 in der Ringscheibe 7, den Ringscheiben 12 und den Ringen 15 hindurch sind so, wie bei 17 angedeutet, zahlreiche über dem Umfang verteilte Verschraubungen vorgenommen.

## Ansprüche

1. Erdverlegte Rohrleitung (1) , die aus einem ein Medium führenden Mediumrohr (2) und einem dieses mit Abstand umgebenden Mantelrohr (3) besteht, die an einem Festpunkt, insbesondere mit axialer Vorspannung, verbunden sind durch zwei am Mantelrohr (3) angeordnete Ringscheiben (12) und eine dazwischen am Mediumrohr (2) angeordnete Ringscheibe (7), die über wärmedämmende Zwischenlagen (15) axial aneinanderliegen,
dadurch gekennzeichnet,
daß die genannte eine Ringscheibe (7) an einem als Drehteil ausgeführten kurzen Rohrstück (5) des Mediumrohres (2) ausgebildet ist und die Ringscheiben (7;12) axial verschraubt (17) sind.

2. Rohrleitung nach Anspruch 1,
dadurch gekennzeichnet,
daß die Wanddicke des Rohrstückes (5) zwischen seinen Enden und der Ringscheibe (7) nach außen zunimmt.

3. Rohrleitung nach Anspruch 1 oder 2,
dadurch gekennzeichnet,
daß die genannten zwei Ringscheiben (12) das Mantelrohr (3) radial durchsetzen und an der Außenseite des Mantelrohres (3) mit ihm verschweißt (13) sind.

## Claims

1. Buried pipe (1) consisting of an inner pipe (2) which carries the medium and a jacket pipe (3) which encloses the inner pipe at an interspace, the pipes being connected with axial prestress at an anchor piece by means of two ring plates (12) located at the jacket pipe (3) and a ring plate (7) placed in between at the inner pipe (2), the ring plates being axially adjacent with intermediate layers of heat insulation;
characterised in that
the named ring plate (7) develops from a short branch of the inner pipe (5) which is constructed as a turned part, and by the fact that the ring plates (7, 12) are screwed axially.

2. Pipe according to claim 1,
characterised in that
the wall thickness of the pipe branch (5) increases outwardly between its ends and the ring plate.

3. Pipe according to claim 1 or 2,
characterised in that
the named two ring plates (12) break through the jacket pipe (3) radially and are welded to its outer wall (13).

## Revendications

1. Tuyauterie enterrée (1) composée d'un tube service transportant le fluide (2) et d'un tube enveloppe (3) raccordés à un point fixe, en particulier pour contrainte axiale, par l'intermédiaire de deux viroles (12) situées sur le tube enveloppe (3) et d'une virole (7) située sur le tube service (2) disposées axialement l'une contre l'autre à l'aide de matériau isolant (15),
caractérisée par le fait
que ladite virole (7) est réalisée à partir d'un tronçon de tube usiné (5) et que les viroles (7,12) sont raccordées axialement par boulons.

2. Tuyauterie selon révendication 1
caractérisée par le fait
que l'épaisseur de paroi du tronçon de tube usiné (5) augmente vers l'extérieur depuis les extrémités vers la virole (7).

3. Tuyauterie selon révendication 1 ou 2
caractérisée par le fait
que les dites deux viroles (12) traversent le tube enveloppe (3) et qu'elles sont rendues solidaires avec celui-ci par l'intermédiaire de soudures (13).

Fig. 1

Fig. 2

EP 0 265 677 B1